# EUROPÄISCHE PATENTANMELDUNG

(11) **EP 3 725 499 A1**
(43) Veröffentlichungstag der Anmeldung: **21.10.2020**
(21) Anmeldenummer: 19169185.6
(22) Anmeldetag: 15.04.2019
(51) Int. Cl.: B29C 64/386, B29C 64/393, B33Y 50/02, G06T 7/00, G06T 7/80, G06T 5/00

(54) **KALIBRIERUNG EINER ZUR ÜBERWACHUNG EINES ADDITIVEN FERTIGUNGSVERFAHRENS VORGESEHENEN KAMERA**

(71) Anmelder: Siemens Aktiengesellschaft, 80333 München (DE)
(72) Erfinder: Otte, Clemens, 81739 München (DE); Forster, Frank, 81739 München (DE); Graichen, Andreas, 60211 Norrköping (SE); Laloni, Claudio, 82024 Taufkirchen (DE)

(57) **Zusammenfassung**

Die Erfindung betrifft ein Verfahren zur Kalibrierung einer Kamera (20), wobei die Kamera (20) dazu vorgesehen ist, eine additive Fertigung eines Gegenstands, bei der Material (12) in einer Vielzahl von Schichten aufgetragen wird, zu überwachen. Das Verfahren umfasst die folgenden Schritte:
a) Bereitstellen der Kamera (20) und Bereitstellen von Mitteln zur Durchführung der additiven Fertigung des Gegenstands,
b) Aufnehmen eines Bildes (21) des sich in der Herstellung befindlichen oder bereits fertiggestellten Gegenstands mittels der Kamera (20),
c) Vergleich des aufgenommenen Bildes (21) mit einem Muster (40) des Gegenstands,
d) Bestimmen einer Kalibrierfunktion basierend auf dem Vergleich aus Schritt c), die dazu vorgesehen ist, das aufgenommene Bild (21) in ein korrigiertes Bild zu transformieren, wobei das korrigierte Bild des Gegenstands im Wesentlichen dem Muster (40) des Gegenstands entspricht, und
e) Kalibrieren der Kamera (20) mittels der Kalibrierfunktion.

Des Weiteren betrifft die Erfindung ein Computerprogramm umfassend Befehle, die bei der Ausführung des Programms durch einen Computer diesen veranlassen, dass er die Schritte des genannten Verfahrens ausführt. Schließlich betrifft die Erfindung eine Vorrichtung umfassend Mittel zur Durchführung einer additiven Fertigung eines Gegenstands, eine zur Überwachung des additiven Fertigungsverfahrens vorgesehenen Kamera (20), und eine Kalibriereinheit (30) zur Kalibrierung der Kamera (20).

## Beschreibung

Die Erfindung betrifft ein Verfahren zur Kalibrierung einer zur Überwachung eines additiven Fertigungsverfahrens vorgesehenen Kamera. Sie betrifft ferner ein Computerprogramm umfassend Befehle, die bei der Ausführung des Programms durch einen Computer diesen veranlassen, dass er die Schritte des genannten Verfahrens ausführt. Schließlich betrifft die Erfindung eine Vorrichtung umfassend Mittel zur Durchführung einer additiven Fertigung eines Gegenstands, eine zur Überwachung des additiven Fertigungsverfahrens vorgesehenen Kamera, und eine Kalibriereinheit zur Kalibrierung der Kamera.

Die Überwachung eines additiven Fertigungsverfahrens ist wichtig, um etwaige Abweichungen im Prozess frühzeitig zu erkennen und die Qualität der gefertigten Gegenstände gewährleisten zu können. Für die Überwachung additiver Fertigungsverfahren werden typischerweise Kameras verwendet, die Bilder während des Fertigungsprozesses aufnehmen und speichern.

Bei der Aufnahme der Bilder kann es zu perspektivischen Verzerrungen und geometrischen Abbildungsfehlern kommen. Letztere werden im Fachjargon als Verzeichnungen bezeichnet, wobei zwischen kissen- und tonnenförmigen Verzeichnungen unterschieden wird. Sie beruhen auf Abbildungsfehlern, die in der Linsengleichung zu einer lokalen Veränderung des Abbildungsmaßstabes führen. Als Resultat wird das aufgenommene Objekt nicht maßstabsgetreu, sondern verzerrt wiedergegeben.

Der von der Kamera zu überwachende Bereich umfasst in der Regel die Grundplatte (*englisch: build plate*), auf der der zu verarbeitende Werkstoff im additiven Fertigungsverfahren aufgebracht wird. Die Grundplatte hat in der Regel eine Grundfläche von mindestens 20 cm x 20 cm, oftmals auch größer. Diese Fläche ist also von der Kamera zu erfassen. Auch wenn die auftretenden Verzerrungen gering sind und beispielsweise nur im Millimeter- oder gar Mikrometerbereich liegen, sind sie für die hohen Präzisions- und Qualitätsanforderungen, die an additive Fertigungsverfahren gestellt werden, unter Umständen nicht tolerierbar.

Aus diesem Grund werden Kameras, die einen additiven Fertigungsprozess überwachen, herkömmlicherweise kalibriert. Dies bedeutet, dass ein von der Kamera aufgenommenes Bild mittels einer Kalibrierfunktion in ein korrigiertes Bild umgewandelt wird, welches den aufgenommenen Gegenstand idealerweise ohne Verzerrungen, d.h. maßstabsgetreu, wiedergibt.

Die Kamera ist auf jeden Fall bei einer erstmaligen Installation in einem 3D-Druckaufbau zu kalibrieren. Weitere Kalibrierungen sind bei mechanischen Änderungen im Aufbau oder in regelmäßigen Abständen zur Kontrolle empfehlenswert.

Im Stand der Technik sind für die Kalibrierung zum einen die Verwendung sogenannter Kalibrierplatten bekannt. Eine Kalibrierplatte weist ein geometrisches Muster auf, z.B. ein kariertes Muster. Vorteilhafterweise ist das Muster sehr präzise auf der Kalibrierplatte abgebildet und dessen Form ist sehr genau bekannt. Die Kalibrierplatte wird in definierter Position und Orientierung in der Vorrichtung zur additiven Fertigung platziert. Beispielsweise wird die Kalibrierplatte auf die Grundplatte des 3D-Druckers platziert. Anschließend wird mittels der Kamera ein Bild von der Kalibrierplatte aufgenommen und mit der vorbekannten Form des auf der Kalibrierplatte abgebildeten Musters verglichen. Typischerweise werden für diesen Vergleich einige wenige Punkte - im Fall des karierten Musters beispielsweise einige ausgewählte Kreuzungspunkte - herangezogen; der Vergleich erfolgt jedoch mit höchster Präzision, im Pixel- oder Subpixel-Bereich. Basierend auf diesem Vergleich wird eine Kalibrierfunktion ermittelt, die das aufgenommene Bild insofern korrigiert, als dass das korrigierte Bild mit dem tatsächlichen Muster der Kalibrierplatte bestmöglich übereinstimmt.

Ein Nachteil dieses Kalibrierverfahrens liegt darin, dass es relativ aufwändig durchzuführen ist. Da die Kalibrierplatte sehr sorgfältig an dem vorbestimmten Ort platziert werden muss, nimmt die Kalibrierung eine gewisse Zeit in Anspruch und kann in der Regel nur von eingewiesenem Personal durchgeführt werden. Des Weiteren muss der Produktivbetrieb hierfür unterbrochen werden; der 3D-Drucker steht also während der Zeit, in der das Kalibrierverfahren durchgeführt wird, nicht zur Verfügung.

Ein weiterer Nachteil des Kalibrierplatten-basierten Kalibrierverfahrens ist, dass der Benutzer über eine solche Kalibrierplatte verfügen muss. Die Kalibrierplatte wird in der Regel von dem Originalgerätehersteller der 3D-Druckeinrichtung gehalten und ist nicht für jedermann verfügbar.

Ein zweites im Stand der Technik bekanntes Verfahren zur Kalibrierung einer zur Überwachung eines additiven Fertigungsverfahrens vorgesehenen Kamera besteht darin, anlagenspezifische Referenzmarker, die als zeitlich unveränderlich angenommen werden, als Referenzpunkte zur Kalibrierung heranzuziehen. Unter anlagenspezifischen Referenzmarker werden hierbei leicht wiedererkennbare strukturelle Merkmale an der 3D-Druckeinrichtung, wie z.B. Schraubenköpfe, Ecken oder eingravierte Marker, verstanden, deren Position in der Druckeinrichtung exakt bekannt ist und während des Kalibrierverfahrens mit ihrer Position auf dem von der Kamera aufgenommenen Bild verglichen wird.

Ein Nachteil dieses Kalibrierverfahrens liegt darin, dass nicht jede 3D-Druckeinrichtung derartige leicht wiedererkennbare und unverrückbare anlagenspezifische Punkte aufweist. Des Weiteren können solche Referenzmarker während des additiven Fertigungsverfahrens teilweise oder komplett überdeckt werden. Dies ist insbesondere für Strahlschmelzverfahren wie das selektive Laserschmelzen der Fall. Hier werden während des Aufbringens des pulverförmigen Werkstoffs oftmals etwaig vorhandene Referenzmarker überdeckt, so dass eine zuverlässige und präzise Identifikation der Referenzmarker nicht gewährleistet ist.

Vor dem Hintergrund dieses Standes der Technik stellt sich für den Fachmann die Aufgabe, ein alternatives Verfahren zur Kalibrierung einer zur Überwachung eines additiven Fertigungsverfahrens vorgesehenen Kamera zu entwickeln, das zumindest einen Teil der genannten Nachteile herkömmlicher Kalibrierverfahren überwindet. Eine weitere Aufgabe besteht in der Bereitstellung eines entsprechenden Computerprogramms und in der Bereitstellung einer entsprechenden Kalibriervorrichtung.

Diese Aufgaben werden durch die Gegenstände der unabhängigen Ansprüche gelöst. Vorteilhafte Ausführungsformen und Spezifizierungen sind in den abhängigen Ansprüchen offenbart.

Demgemäß wird ein Verfahren zur Kalibrierung einer Kamera vorgeschlagen, wobei die Kamera dazu vorgesehen ist, eine additive Fertigung eines Gegenstands, bei der Material in einer Vielzahl von Schichten aufgetragen wird, zu überwachen. Das Verfahren weist die folgenden Schritte auf:
a) Bereitstellen der Kamera und Bereitstellen von Mitteln zur Durchführung der additiven Fertigung des Gegenstands,
b) Aufnehmen eines Bildes des sich in der Herstellung befindlichen oder bereits fertiggestellten Gegenstands mittels der Kamera,
c) Vergleich des aufgenommenen Bildes mit einem Muster des Gegenstands,
d) Bestimmen einer Kalibrierfunktion basierend auf dem Vergleich aus Schritt c), die dazu vorgesehen ist, das aufgenommene Bild in ein korrigiertes Bild zu transformieren, wobei das korrigierte Bild des Gegenstands im Wesentlichen dem Muster des Gegenstands entspricht, und
e) Kalibrieren der Kamera mittels der Kalibrierfunktion.

Unter einer "Kamera" wird eine fototechnische Apparatur verstanden, die statische oder bewegte Bilder elektronisch auf einem digitale Speichermedium aufzeichnen oder über eine Schnittstelle übermitteln kann. Prinzipiell ist auch die analoge Aufnahme von Bildern auf einem fotografischen Film denkbar, auch wenn diese Variante heutzutage kaum mehr praktische Bedeutung mehr hat.

Unter "additiver Fertigung" (*englisch: Additive Manufacturing*), auch als 3D-Druck bezeichnet, werden Fertigungsverfahren verstanden, bei dem Material Schicht für Schicht aufgetragen wird und somit dreidimensionale Gegenstände erzeugt werden. Der schichtweise Aufbau des Gegenstands erfolgt computergesteuert aus einem oder mehreren festen oder flüssigen Werkstoffen nach vorgegebenen Maßen und Formen.

Ein Kernpunkt der vorliegenden Erfindung besteht darin, dass für die Kalibrierung der Kamera anstatt separat bereitgestellter Referenzpunkte auf einer Kalibrierplatte oder ausgewählte anlagenspezifische Referenzmarker der sich in der Herstellung befindliche oder bereits fertiggestellte Gegenstand bzw. dessen Muster herangezogen werden. Es wird also Information über die Geometrie des zu fertigenden Gegenstands selbst verwendet, um das Ausmaß der Verzerrungen in dem von der Kamera aufgenommenen Bild des Gegenstands zu bestimmen und zu korrigieren. Die geometrischen Informationen über den zu fertigenden Gegenstand sind in der Regel ohnehin vorhanden; eine Verwendung einer separaten Kalibrierplatte oder die Festlegung wiedererkennbarer Referenzmarker an der 3D-Druckeinrichtung sind damit nicht mehr notwendig.

Der Aufwand, sich eine Kalibrierplatte für eine bestimmte 3D-Druckeinrichtung beschaffen und gegebenenfalls vorhalten zu müssen, entfällt somit. Auch die Kalibrierung selbst wird potenziell einfacher und schneller, da ein händischer Einbau der Kalibrierplatte ebenfalls entfällt. Ein Vorteil des vorliegenden Kalibrierverfahrens gegenüber dem herkömmlichen Kalibrierplatten-basierten Verfahren ist somit der geringere (messtechnische) Aufwand und ein potenziell schnelleres Bestimmen der Kalibrierfunktion.

Da herkömmlicherweise eine Kamerakalibrierung nur von geschultem Personal durchgeführt wird, kann mit dem vorliegenden Verfahren des Weiteren Zeit und (Reise-)kosten gespart werden, da es für das vorliegende Verfahren nicht mehr die Anwesenheit des geschulten Personals bedarf.

Ein weiterer Vorteil des neuen Kalibrierverfahrens besteht in der Möglichkeit, eine vorhandene Kalibrierung automatisiert auch während der Produktion zu prüfen. Das System kann sich somit selbst überwachen und z.B. Änderungen an der Kamera erkennen.

Noch ein weiterer Vorteil des neuen Kalibrierverfahrens besteht darin, unabhängig von der zur Verfügung gestellten Kalibrierplatte oder anlagenspezifischen Referenzmarkern zu sein. Letzteres ist insbesondere für additive Fertigungsverfahren wie dem selektiven Laserschmelzen von Bedeutung, bei dem der zu verarbeitende Werkstoff in Pulverform auf die Grundplatte aufgebracht wird, oder für Anlagen, die schlicht keine strukturellen Merkmale aufweisen, die sich gut als Referenzmarker eignen.

Die Schritte b) - e) des erfindungsgemäßen Verfahrens laufen vorteilhafterweise automatisch, in anderen Worten automatisiert, ab. Das erfindungsgemäße Verfahren kann demzufolge auch als automatisiertes Verfahren zur Kalibrierung einer Kamera bezeichnet werden.

In einer vorteilhaften Ausführungsform der Erfindung entspricht das Muster einer Schnittkontur eines dreidimensionalen (3D) Konstruktionsmodells des Gegenstands.

Die Maße und Formen des zu druckenden Gegenstands werden durch das sogenannte 3D-Konstruktionsmodell vorgegeben. Dabei handelt es sich um eine perspektivische Abbildung des besagten Gegenstands, der in der Regel auf einem Bildschirm, beispielsweise einem Computerbildschirm, abgebildet werden kann. Typischerweise kann der Nutzer dabei die Perspektive variieren und somit den abgebildeten Gegenstand von verschiedenen Seiten betrachten.

Das 3D-Konstruktionsmodell wird in der Regel rechnergestützt konstruiert und ist demzufolge insbesondere ein *computeraided design* (CAD) Konstruktionsmodell.

Es ist für additive Fertigungsverfahren üblich, dass für jede Schicht, die aufgebracht wird, eine Schichtdatei vorliegt. Diese Dateien können im einfachsten Fall lediglich die Beschreibung der Konturen für jede Schicht enthalten oder aber darüber hinaus bereits Informationen zum Fertigungsprozess. Beispiele für gängige Dateiformate sind "Common Layer Interface" (CLI), "SLiCe" (SLC) oder "Parasolid" (mit der Dateierweiterung *.x_t). Vorteilhafterweise wird die Schnittkontur demnach in einer Schichtdatei, insbesondere mit einem der beiden oben genannten Dateiformate, bereitgestellt.

In einer weiteren vorteilhaften Ausführungsform wird jeder im Fertigungsverfahren aufgetragenen Schicht ein individuelles Muster, insbesondere eine individuelle Schnittkontur, zugeordnet und das aufgenommene Bild wird mit demjenigen Muster verglichen, das der aufgetragenen Schicht entspricht.

In einem konkreten Beispiel werde ein 3 cm hoher Gegenstand mittels selektiven Laserschmelzens aus einer Vielzahl von Schichten gefertigt. Die Schichtdicke betrage 30 µm. Der Gegenstand besteht folglich aus 1000 Schichten. Für jede Schicht existiert eine individuelle Schichtdatei. Diese enthält die Kontur des Gegenstands in der jeweiligen Schicht (oder: Höhe) des Gegenstands sowie, optional, Prozessparameter für die Auftragung des pulverförmigen Werkstoffs und/oder Einstellungen des Lasers für die Umschmelzung des Pulvers. Wird nun beispielsweise gerade die 267. Schicht erzeugt und die Kamera nimmt ein Bild vom dem nun zu einem guten Viertel fertiggestellten Gegenstand auf, wird dieses aufgenommene Bild sinnvollerweise mit derjenigen Schichtdatei verglichen, die die Schnittkontur der 267. Schicht enthält. Aus den geometrischen Abweichungen auf dem von der Kamera aufgenommenen Bild und der entsprechenden individuellen Schichtdatei kann dann eine geeignete Kalibrierfunktion bestimmt werden.

Die Schichtdatei enthält in der Regel für jeden Bildpunkt die Information, ob an dieser Stelle eine (weitere) Schicht auf den sich in der Herstellung befindlichen Gegenstand aufzubringen ist oder nicht. Das Kamerabild, das den Gegenstand nach dem Aufbringen dieser Schicht abbildet, zeigt jedoch den Gegenstand mit etwaigen Schattierungen, Spiegelungen und ähnlichen Effekten. Darüber hinaus zeigt das Kamerabild einen den Gegenstand umgebenden Hintergrund, beispielsweise das nicht umgeschmolzene Pulverbett und Teile der 3D-Druckeinrichtung. In einer vorteilhaften Ausführungsform der Erfindung wird deshalb nach der Aufnahme des Bildes der Gegenstand im aufgenommenen Bild segmentiert und anschließend das segmentierte Bild mit dem Muster verglichen.

Automatische Verfahren zur Bildsegmentierung sind dem Fachmann aus dem Bereich der digitalen Bildverarbeitung und dem maschinellen Sehen hinlänglich bekannt. Unter der Bildsegmentierung wird die Erzeugung von inhaltlich zusammenhängenden Regionen durch Zusammenfassung benachbarter Pixel oder Voxel entsprechend einem vorbestimmten Homogenitätskriterium bezeichnet. Bildverarbeitungsprogramme wie das frei erhältliche "scikit-image" bieten Segmentierungsalgorithmen und höhere Bildverarbeitungsalgorithmen auf der Basis verschiedener Segmentierungsalgorithmen an.

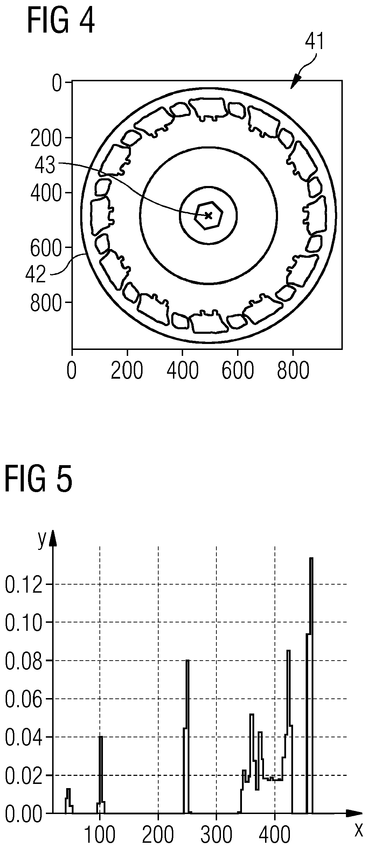

Der Vergleich zwischen dem aufgenommenen Bild, auf dem vorteilhafterweise der relevante Gegenstand, wie gerade beschrieben, segmentiert wurde, und dem Muster erfolgt in einer ersten Alternative mittels eines Vergleichs der Abstände ausgewählter Referenzpunkte zueinander. Geeignete Referenzpunkte können reale Punkte, z.B. Eckpunkte, des Gegenstands sein. Geeignete Referenzpunkte können auch fiktive Referenzpunkte sein. Besteht der Gegenstand beispielsweise aus mehreren rotationssymmetrischen Objekten, kann für jedes rotationssymmetrische Objekt ein fiktiver Mittelpunkt berechnet werden, der dann als Referenzpunkt verwendet werden kann. Ein Beispiel hierzu ist in Abbildung 4 illustriert und in der entsprechenden Beschreibung näher erläutert. Die jeweiligen Abstände der Referenzpunkte zueinander werden einmal für den auf dem Kamerabild abgebildeten Gegenstand und ein einmal für das entsprechende Muster bestimmt. Hierbei bietet sich die Verwendung Euklidischer Abstände an. Aus etwaigen Abweichungen der Abstände kann auf eine Verzerrung bzw. Verzeichnung des Kamerabildes geschlossen werden.

In einer zweiten Alternative wird der Umriss des Gegenstands für den Vergleich zwischen dem aufgenommenen Bild und dem Muster herangezogen. Es werden also eine Vielzahl der den Gegenstand beschreibenden Bildpunkte für den Vergleich zwischen dem aufgenommenen Bild und dem Muster herangezogen.

Beide Alternativen, aber insbesondere die zweite Alternative, stellen einen fundamentalen konzeptionellen Unterschied zu herkömmlichen Kalibrierverfahren dar. Im Stand der Technik werden typischerweise einige wenige Punkte (z.B. Kreuzungspunkte auf einer Kalibrierplatte oder anlagenspezifische Referenzmarker) auf dem aufgenommenen Bild mit dem Vergleichsobjekt verglichen; dieser Vergleich wird jedoch mit sehr hoher Präzision durchgeführt. In den genannten Ausführungsformen der vorliegenden Erfindung werden dagegen eine Vielzahl von Referenzpunkte für den Vergleich zwischen dem Kamerabild und dem Muster verwendet. Wenn eine große Menge an Bildpunkten bei der Kalibrierung berücksichtigt werden, kann an die Präzision des Vergleichs weniger strenge Anforderungen gestellt werden. Dies begründet sich darauf, dass bei einer großen Menge an Vergleichswerten auch statistische Aspekte beim Vergleich eine Rolle spielen können.

In einer speziellen Ausführungsform der Erfindung wird als Maß für die Ähnlichkeit des aufgenommenen Bilds und des Musters die Kullback-Leibler-Divergenz der beiden Häufigkeitsverteilungen, die jeweils den Abstand der jeweiligen den Umriss des Gegenstands beschreibenden Bildpunkte zu einem Referenzpunkt darstellen, verwendet.

Die Kullback-Leibler-Divergenz (kurz KL-Divergenz), die auch Kullback-Leibler-Entropie, Kullback-Leibler-Abstand oder "Information Gain" genannt wird, bezeichnet allgemein ein Maß für die Unterschiedlichkeit zweier Wahrscheinlichkeitsverteilungen. Typischerweise repräsentiert dabei eine der Verteilungen empirische Beobachtungen (hier das Kamerabild), während die andere ein Modell oder eine Approximation darstellt (hier das Muster, beispielsweise die Schichtdatei).

Konkret werden in dieser Ausführungsform die Häufigkeitsverteilung der gemessenen Abstände derjenigen Bildpunkte, die den Umriss des Gegenstands beschreiben, zu einem Referenzpunkt für das (segmentierte) Kamerabild mit der Häufigkeitsverteilung der ermittelten Abstände der Bildpunkte zu demselben Referenzpunkt für das Muster verglichen. Stimmen diese überein, kann daraus geschlossen werden, dass das Kamerabild das Muster maßstabsgetreu wiedergibt. Ist die Häufigkeitsverteilung des Kamerabilds jedoch in irgendeiner Weise bezüglich der Häufigkeitsverteilung des Musters verschoben, verbreitert oder anderweitig unterschiedlich, ist dies ein Hinweis auf eine verzerrte/verzeichnete Abbildung auf dem Kamerabild.

Besteht der Gegenstand aus mehreren Objekten (oder: Einzelkomponenten), sind vorteilhafterweise die Umrisse mehrerer, insbesondere aller, Objekte des Gegenstands für den Vergleich heranzuziehen.

Die Kalibrierfunktion im Schritt d) des Verfahrens kann beispielsweise konkret mittels der folgenden Schritte bestimmt werden:
d1) Initialisieren der Kalibrierfunktion mit Initialisierungsparametern (θᵢ),
d2) Transformieren des aufgenommenen Bilds in ein korrigiertes Bild mittels der Kalibrierfunktion,
d3) Bestimmen der Abweichung (E) zwischen dem korrigierten Bild und dem Muster,
d4) Ändern der Parameter (θ) der Kalibrierfunktion, um die Abweichung (E) zu reduzieren,
d5) Wiederholen der Schritte d2) bis d4) bis die Abweichung kleiner als ein vorbestimmter Schwellenwert ist.

Die Parameter der Kalibrierfunktion können perspektivische Verzerrungen, (tonnen- und kissenförmige) Verzeichnungen, aber auch translatorische und rotatorische Korrekturen betreffen. Die Kalibrierfunktion ist idealerweise mit Initialisierungsparametern initialisiert, die einer groben Vor-Kalibrierung oder einer früheren Kalibrierung an derselben 3D-Druckeinrichtung entnommen sind.

Die Abweichung zwischen dem korrigierten Bild und dem Muster kann mit einem Skalar, der die Abstände der Referenzpunkte zueinander charakterisiert, quantifiziert werden. Die Abweichung kann auch, insbesondere wenn für den Vergleich die Umrisse des Gegenstands herangezogen werden, durch die Kullback-Leibler-Divergenz der beiden Häufigkeitsverteilungen charakterisiert werden.

Die Bestimmung der Kalibrierfunktion ist in der Regel stabiler und robuster, wenn ihre Parameter nicht nur für eine Schicht, sondern für mehrere Schichten bestimmt werden. Es ist folglich vorteilhaft, wenn die Kalibrierung der Kamera auf mehreren Vergleichen, die für unterschiedliche Schichten durchgeführt wurden, basieren.

Die vorliegende Erfindung ist prinzipiell für jede Art additiver Fertigung anzuwenden. Mit besonders großem Nutzen kann sie jedoch bei Strahlschmelzverfahren angewendet werden. In anderen Worten kann die vorliegende Erfindung vorteilhafterweise in additiven Fertigungsverfahren implementiert werden, in denen
- ein zu verarbeitender Werkstoff in einer dünnen Schicht in Pulverform auf einer Grundplatte aufgebracht wird,
- nach der Schichtauftragung der pulverförmige Werkstoff mittels Laserstrahlung lokal umgeschmolzen wird,
- die umgeschmolzene Schicht nach ihrer Erstarrung eine feste Materialschicht bildet, und
- dieser Zyklus so oft wiederholt wird, bis der zu fertigende Gegenstand seine geplante Form und Größe erreicht hat.

Ein Beispiel für solch ein Verfahren ist das selektive Laserschmelzen. Das selektive Laserschmelzen wird im Englischen also "Selective Laser Melting" (SLM) oder auch "Laser Powder Bed Fusion" (LPBF oder L-PBF) bezeichnet. Ähnliche Strahlschmelzverfahren wie das selektive Laserschmelzen sind das Elektronenstrahlschmelzen und das selektive Lasersintern.

Beim selektiven Laserschmelzen wird der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird solange wiederholt, bis alle Schichten umgeschmolzen sind. Das fertige Bauteil wird vom überschüssigen Pulver gereinigt, nach Bedarf bearbeitet oder sofort verwendet.

Die für den Aufbau des Bauteils typischen Schichtstärken bewegen sich für alle Materialien zwischen 15 und 500 µm.

Die Daten für die Führung des Laserstrahls werden mittels einer Software aus einem 3D-Konstruktionsmodell, z.B. einem 3D-CAD-Körper, erzeugt. Im ersten Berechnungsschritt wird das Bauteil in einzelne Schichten unterteilt. Im zweiten Berechnungsschritt werden für jede Schicht die Bahnen (Vektoren) erzeugt, die der Laserstrahl abfährt. Um die Kontaminierung des Werkstoffs mit Sauerstoff zu vermeiden, findet der Prozess üblicherweise unter Schutzgasatmosphäre mit Argon oder Stickstoff statt.

Durch selektives Laserschmelzen gefertigte Bauteile zeichnen sich durch große spezifische Dichten (> 99 %) aus. Dies gewährleistet, dass die mechanischen Eigenschaften des generativ hergestellten Bauteils weitgehend denen des Grundwerkstoffs entsprechen. Es kann aber auch gezielt, nach bionischen Prinzipien oder zur Sicherstellung eines partiellen E-Moduls, ein Bauteil mit selektiven Dichten gefertigt werden. Im Leichtbau der Luft- und Raumfahrt und bei Körperimplantaten sind solch selektive Elastizitäten innerhalb eines Bauteils oft gewünscht und mit konventionellen Verfahren so nicht herstellbar.

Gegenüber konventionellen Verfahren (Gussverfahren) zeichnet sich das Laserschmelzen dadurch aus, dass Werkzeuge oder Formen entfallen (formlose Fertigung) und dadurch die Produkteinführungszeit reduziert werden kann. Ein weiterer Vorteil ist die große Geometriefreiheit, die das Anfertigen von Bauteilformen ermöglicht, die mit formgebundenen Verfahren nicht oder nur mit großem Aufwand herstellbar sind. Des Weiteren können Lagerkosten reduziert werden, da spezifische Bauteile nicht bevorratet werden müssen, sondern bei Bedarf generativ hergestellt werden.

Vorteilhafterweise wird das Kamerabild des sich in der Herstellung befindlichen oder bereits fertiggestellten Gegenstands nach dem Schmelzen mittels der Laserstrahlung und vor dem Aufbringen des pulverförmigen Werkstoffs für die nächste Materialschicht aufgenommen. Das Schmelzen mittels der Laserstrahlung wird im Fachjargon auch als "exposure" bezeichnet, das Aufbringen des pulverförmigen Werkstoffs für die nächste Materialschicht als "recoating". Vorteilhafterweise wird das Kamerabild also zwischen *exposure* und *recoating* aufgenommen. Der Grund hierfür ist, dass die geschmolzene Schicht typischerweise eine deutlich andere Reflektivität als das nicht behandelte (bestrahlte) Pulver aufweist, so dass der Gegenstand nach der *exposure* in der Regel gut vom umliegenden Pulverbett unterscheidbar ist. Nach dem *recoating* ist der Gegenstand im Allgemeinen nicht oder nur kaum sichtbar, da die gesamte Grundplatte von einer weitgehend homogenen Pulverschicht bedeckt ist.

In einer vorteilhaften Ausführungsform der Erfindung wird die Kalibrierung automatisch zu vorgegebenen Zeitpunkten durchgeführt wird und bei Änderungen in der Kalibrierfunktion ein Nutzer insbesondere durch einen Warnhinweis informiert.

Um eine zweifelsfreie und unangreifbare Dokumentation verfügbar zu haben, die die Kalibrierung der Kamera angibt, kann es vorteilhaft sein, die verwendete Kalibrierfunktion in einer Blockchain zu archivieren.

Die Erfindung betrifft des Weiteren ein Computerprogramm umfassend Befehle, die bei der Ausführung des Programms durch einen Computer diesen veranlassen, dass er die Schritte eines der offenbarten Verfahren ausführt.

Schließlich betrifft die Erfindung auch eine Vorrichtung mit i) Mitteln zur Durchführung einer additiven Fertigung eines Gegenstands, bei der Material in einer Vielzahl von Schichten aufgetragen wird, ii) einer Kamera, die dazu vorgesehen ist, die additive Fertigung des Gegenstands zu überwachen, und iii) einer Kalibriereinheit zur Kalibrierung der Kamera. Die Kalibriereinheit ist dabei ausgestaltet,
- die Aufnahme eines Bildes des sich in der Herstellung befindlichen oder bereits fertiggestellten Gegenstands mittels der Kamera zu veranlassen,
- das aufgenommene Bild mit einem Muster des Gegenstands zu vergleichen,
- eine Kalibrierfunktion basierend auf dem durchgeführten Vergleich zu bestimmen, wobei die Kalibrierfunktion dazu vorgesehen ist, das aufgenommene Bild in ein korrigiertes Bild zu transformieren, wobei das korrigierte Bild des Gegenstands im Wesentlichen dem Muster des Gegenstands entspricht, und
- die Kamera mittels der Kalibrierfunktion zu kalibrieren.

Jegliche Merkmale, die im Zusammenhang mit Ausführungsbeispielen und Varianten des Verfahrens offenbart wurden, sind auf die genannte Vorrichtung entsprechend übertragbar.

Nachfolgend wird die Erfindung anhand von Ausführungsbeispielen unter Bezugnahme auf die angehängten Zeichnungen beschrieben, in der
- Fig. 1: eine Vorrichtung umfassend eine 3D-Druckeinrichtung, eine Kamera und eine Kalibriereinheit,
- Fig. 2: ein mit einer Kamera aufgenommenes Bild eines in der Herstellung befindlichen Gegenstands,
- Fig. 3: ein zu dem Bild der Fig. 2 gehöriges Muster,
- Fig. 4: den Umriss einer Einzelkomponente aus dem Muster der Fig. 3, und
- Fig. 5: ein Histogramm der Abstände des Umrisses von einem Referenzpunkt der in Fig. 4 abgebildeten Einzelkomponente
darstellt.

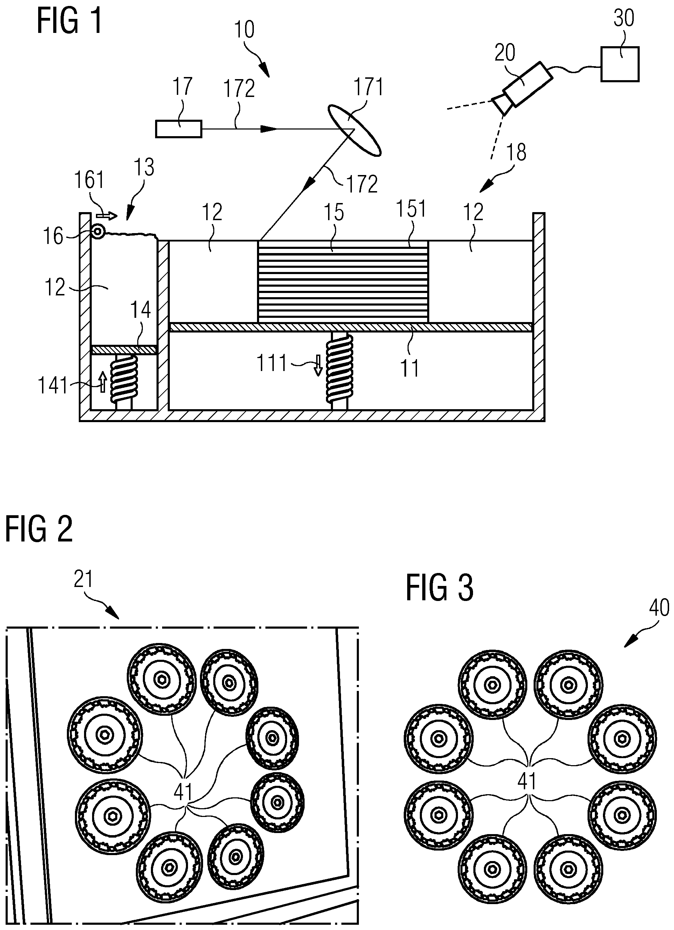

Die Fig. 1 zeigt eine Vorrichtung mit einer 3D-Druckeinrichtung 10, einer Kamera 20 und einer Kalibriereinheit 30. Als 3D-Druckeinrichtung 10 ist beispielhaft eine Anlage zum selektiven Laserschmelzen gezeigt. Die 3D-Druckeinrichtung 10 weist einen Materialvorratsbehälter 13 zur Befüllung mit Material 12 auf. Des Weiteren weist die Druckeinrichtung 10 einen Druckbereich 18, in dem der zu fertigende Gegenstand hergestellt wird, auf. Das Material 12 liegt in Pulverform vor und enthält beispielsweise ein Metall oder eine metallische Verbindung. Der Materialvorratsbehälter 13 weist Seitenwände und einen verstellbaren Boden 14 auf. Der Boden 14 ist höhenverstellbar, so dass das Volumen des Materialvorratsbehälters 13 variabel ist. Die Höhe des Bodens 14 des Materialvorratsbehälters 13 ist mittels einer Steuervorrichtung und entsprechender Aktoren einstell- bzw. regulierbar.

Der Druckbereich 18 weist ebenfalls einen höhenverstellbaren Boden, die sogenannte Grundplatte 11 (*englisch: build plate*), auf. Auch die Grundplatte 11 ist mittels einer Steuervorrichtung und entsprechender Aktoren einstell- bzw. regulierbar. Auf der Grundplatte 11 befindet sich der in der Herstellung befindliche Gegenstand 15. Zu Beginn des Fertigungsprozesses ist die Höhe der Grundplatte 11 maximal. Sie bewegt sich in Richtung des Pfeils mit dem Bezugszeichen 111 während des Aufbaus der Materialschichten 151 des Gegenstands nach unten. Die Bewegungsrichtung 141 des Bodens 14 des Materialvorratsbehälters 13, die durch den Pfeil mit dem Bezugszeichen 141 gekennzeichnet ist, ist der Bewegungsrichtung 111 der Grundplatte 11 entgegengesetzt.

Eine Walze 16 verteilt Material 12 aus dem Materialvorratsbehälter 13 gleichmäßig in den Druckbereich 18. Übliche Schichtdicken beim selektiven Laserschmelzen sind im Bereich 15 µm bis 500 µm. Nach dem Verteilen des pulverförmigen Materials 12 (oder: Werkstoffs) - dieser Vorgang wird im Fachjargon auch als *recoating* bezeichnet -, wird in einem vorgegebenen Bereich das Material 12 mit einem Laserstrahl 172 bestrahlt, der sogenannten *exposure.* Der Laserstrahl 172 wird von einem Laser 17 emittiert und mittels eines drehbar gelagerten Umlenkspiegels 171 auf einen gewünschten Punkt gelenkt. Das pulverförmige Material 12 wird mittels Laserstrahlung lokal vollständig umgeschmolzen und bildet nach der Erstarrung eine feste Materialschicht 151. Anschließend wird die Grundplatte 11 um den Betrag einer Schichtdicke abgesenkt und erneut Material 12 aufgetragen. Dieser Zyklus wird solange wiederholt, bis alle Materialschichten umgeschmolzen sind.

Eine Kamera 20 ist so platziert, dass sie ein Bild von der mit dem Material 12 bedeckten Grundplatte 11 und dem in der Herstellung befindlichen Gegenstand 15 aufnehmen kann. Es ist jedoch in aller Regel unvermeidbar, dass das von der Kamera 20 aufgenommene Bild Verzerrungen, Verzeichnungen oder ähnliche Artefakte aufweist. Folglich ist eine Kalibrierung der Kamera 20, die diese optischen Effekte korrigiert, nötig.

Im Stand der Technik werden Kameras beispielsweise mittels Kalibrierplatten kalibriert. Die vorliegende Erfindung schlägt statt der Verwendung einer Kalibrierplatte den Vergleich eines Bildes des in der Herstellung befindlichen oder bereits fertiggestellten Gegenstands mit einem Muster vor. Die Fig. 2 zeigt ein von einer Kamera aufgenommenes Bild 21 eines Gegenstands. Der Gegenstand besteht hier aus acht gleichen ringförmigen Einzelkomponenten. Ob sich der Gegenstand noch in der Herstellung befindet oder aber bereits der fertige Gegenstand nach Laserbestrahlung *(exposure)* der letzten Schicht zu sehen ist, ist für die Veranschaulichung der erfinderischen Idee irrelevant. In jedem Fall zeigt die Fig. 3 das entsprechende Muster 40, in diesem Fall aus einer Schichtdatei, das der auf dem Bild in Fig. 2 abgebildeten Materialschicht zugeordnet ist.

Es lässt sich bereits mit bloßem Auge erkennen, dass das Bild des Gegenstands, das in Fig. 2 zu sehen ist, im Vergleich zum in Fig. 3 dargestellten Muster verzerrt ist. Mittels einer Kalibrierfunktion soll dieses verzerrte Bild korrigiert werden, so dass es im Wesentlichen dem Muster entspricht.

Hierfür können z.B. die Häufigkeitsverteilungen (auch: Histogramme) der Bildpunkte, die den Umriss des Gegenstands darstellen, des aufgenommenen Bilds und des Musters verglichen werden. Konkret werden hierbei die Abstände, die die Bildpunkte des Umrisses bezüglich eines Referenzpunkts aufweisen, in den Histogrammen dargestellt und verglichen.

Der in den Fig. 2 und 3 beispielhaft gezeigte Gegenstand weist acht gleichartige, voneinander getrennte Einzelkomponenten 41 auf. Es bietet sich an, die Häufigkeitsverteilungen für jede der Einzelkomponenten 41 getrennt zu vergleichen.

Die Fig. 4 zeigt den Umriss 42 einer Einzelkomponente 41 des genannten Gegenstands. Die Auflösung der Kamera ist hier bereits berücksichtigt, weswegen der in Fig. 5 gezeigte Umriss eine gewisse Unschärfe aufweist. Als Referenzpunkt 43 wird der Mittelpunkt, also das Zentrum, der Einzelkomponente gewählt.

Die Fig. 5 zeigt die Häufigkeitsverteilung der Abstände der Bildpunkte des in Fig. 4 gezeigten Umrisses 42. Auf der x-Achse ist die Entfernung vom Referenzpunkt 53 (in Millimetern), auf der γ-Achse die relative Häufigkeit aufgetragen.

Diese Häufigkeitsverteilung ist nun mit der Häufigkeitsverteilung einer Einzelkomponente, wie sie auf dem aufgenommenen Bild 21 in Fig. 2 zu sehen ist, zu vergleichen. Es wird sich zeigen, dass die Häufigkeitsverteilungen voneinander abweichen. Mittels Optimierung der Parameter der Kalibrierfunktion müsste dann versucht werden, ein (relatives) Minimum der Kullback-Leibler-Divergenz zu erreichen.

Somit ist eine Kalibrierung der die additive Fertigung überwachenden Kamera möglich, ohne, wie im Stand der Technik, auf eine Kalibrierplatte oder anlagenspezifische Referenzmarker zurückzugreifen.

## Patentansprüche

1. Verfahren zur Kalibrierung einer Kamera (20), wobei die Kamera (20) dazu vorgesehen ist, eine additive Fertigung eines Gegenstands, bei der Material (12) in einer Vielzahl von Schichten aufgetragen wird, zu überwachen, und wobei das Verfahren die folgenden Schritte umfasst:
a) Bereitstellen der Kamera (20) und Bereitstellen von Mitteln zur Durchführung der additiven Fertigung des Gegenstands,
b) Aufnehmen eines Bildes (21) des sich in der Herstellung befindlichen oder bereits fertiggestellten Gegenstands mittels der Kamera (20),
c) Vergleich des aufgenommenen Bildes (21) mit einem Muster (40) des Gegenstands,
d) Bestimmen einer Kalibrierfunktion basierend auf dem Vergleich aus Schritt c), die dazu vorgesehen ist, das aufgenommene Bild (21) in ein korrigiertes Bild zu transformieren, wobei das korrigierte Bild des Gegenstands im Wesentlichen dem Muster (40) des Gegenstands entspricht, und
e) Kalibrieren der Kamera (20) mittels der Kalibrierfunktion.

2. Verfahren nach Anspruch 1,
wobei das Muster (40) einer Schnittkontur eines 3D-Konstruktionsmodells des Gegenstands entspricht.

3. Verfahren nach Anspruch 2,
wobei die Schnittkontur als Schichtdatei, insbesondere mit dem Dateiformat "Common Layer Interface - CLI", "SLiCe - SLC" oder "Parasolid", bereitgestellt wird.

4. Verfahren nach einem der vorhergehenden Ansprüche,
wobei jeder im Fertigungsverfahren aufgetragenen Schicht ein individuelles Muster (40), insbesondere eine individuelle Schnittkontur, zugeordnet ist, und wobei das aufgenommene Bild (21) mit demjenigen Muster (40) verglichen wird, das der aufgetragenen Schicht entspricht.

5. Verfahren nach einem der vorhergehenden Ansprüche,
wobei nach der Aufnahme des Bildes (21) der Gegenstand im aufgenommenen Bild (21) segmentiert wird und anschließend das segmentierte Bild mit dem Muster (40) verglichen wird.

6. Verfahren nach einem der vorhergehenden Ansprüche,
wobei der Vergleich zwischen dem aufgenommenen Bild (21) und dem Muster (40) einen Vergleich der Abstände, insbesondere der Euklidischen Abstände, ausgewählter Referenzpunkte zueinander beinhaltet.

7. Verfahren nach einem der vorhergehenden Ansprüche,
wobei der Umriss des Gegenstands für den Vergleich zwischen dem aufgenommenen Bild (21) und dem Muster (40) herangezogen wird.

8. Verfahren nach Anspruch 7,
wobei als Maß für die Ähnlichkeit des aufgenommenen Bilds (21) und des Musters (40) die Kullback-Leibler-Divergenz der beiden Häufigkeitsverteilungen, die jeweils den Abstand der jeweiligen den Umriss des Gegenstands beschreibenden Bildpunkte zu einem Referenzpunkt (43) darstellen, verwendet wird.

9. Verfahren nach einem der vorhergehenden Ansprüche,
wobei die Kalibrierfunktion mittels der folgenden Schritte bestimmt wird:
d1) Initialisieren der Kalibrierfunktion mit Initialisierungsparametern,
d2) Transformieren des aufgenommenen Bilds (21) in ein korrigiertes Bild mittels der Kalibrierfunktion,
d3) Bestimmen der Abweichung zwischen dem korrigierten Bild und dem Muster (40),
d4) Ändern der Parameter der Kalibrierfunktion, um die Abweichung zu reduzieren,
d5) Wiederholen der Schritte d2) bis d4) bis die Abweichung kleiner als ein vorbestimmter Schwellenwert ist.

10. Verfahren nach einem der vorhergehenden Ansprüche,
wobei in dem additiven Fertigungsverfahren
- ein zu verarbeitender Werkstoff in einer dünnen Schicht in Pulverform auf einer Grundplatte (11) aufgebracht wird,
- nach der Schichtauftragung der pulverförmige Werkstoff mittels Laserstrahlung lokal umgeschmolzen wird,
- die umgeschmolzene Schicht nach ihrer Erstarrung eine feste Materialschicht (151) bildet, und
- dieser Zyklus so oft wiederholt wird, bis der zu fertigende Gegenstand seine geplante Form und Größe erreicht hat.

11. Verfahren nach Anspruch 10,
wobei das Bild (21) gemäß Schritt b) des Verfahrens nach der Umschmelzung mittels der Laserstrahlung und vor dem Aufbringen des pulverförmigen Werkstoffs für die nächste Materialschicht (151) aufgenommen wird.

12. Verfahren nach einem der vorhergehenden Ansprüche,
wobei die Kalibrierung automatisch zu vorgegebenen Zeitpunkten durchgeführt wird und bei Änderungen in der Kalibrierfunktion ein Nutzer insbesondere durch einen Warnhinweis informiert wird.

13. Verfahren nach einem der vorhergehenden Ansprüche, wobei die Kalibrierfunktion in einer Blockchain gespeichert wird.

14. Computerprogramm, umfassend Befehle, die bei der Ausführung des Programms durch einen Computer diesen veranlassen, dass er die Schritte des Verfahrens nach einem der vorhergehenden Ansprüche ausführt.

15. Vorrichtung umfassend Mittel zur Durchführung einer additiven Fertigung eines Gegenstands, bei der Material (12) in einer Vielzahl von Schichten aufgetragen wird, eine Kamera (20), die dazu vorgesehen ist, die additive Fertigung des Gegenstands zu überwachen, und eine Kalibriereinheit (30) zur Kalibrierung der Kamera (20), wobei die Kalibriereinheit (30) dazu ausgestaltet ist,
- die Aufnahme eines Bildes (21) des sich in der Herstellung befindlichen oder bereits fertiggestellten Gegenstands mittels der Kamera (20) zu veranlassen,
- das aufgenommene Bild (21) mit einem Muster (40) des Gegenstands zu vergleichen,
- eine Kalibrierfunktion basierend auf dem durchgeführten Vergleich zu bestimmen, wobei die Kalibrierfunktion dazu vorgesehen ist, das aufgenommene Bild (21) in ein korrigiertes Bild zu transformieren, wobei das korrigierte Bild des Gegenstands im Wesentlichen dem Muster (40) des Gegenstands entspricht, und
- die Kamera (20) mittels der Kalibrierfunktion zu kalibrieren.
